(19) Europäisches Patentamt
European Patent Office
Office européen des brevets

(11) **EP 3 347 673 B1**

(12) **EUROPÄISCHE PATENTSCHRIFT**

(45) Veröffentlichungstag und Bekanntmachung des Hinweises auf die Patenterteilung:
**02.11.2022** **Patentblatt 2022/44**

(21) Anmeldenummer: **16770229.9**

(22) Anmeldetag: **13.09.2016**

(51) Internationale Patentklassifikation (IPC):
*G01C 15/00* *(2006.01)*

(52) Gemeinsame Patentklassifikation (CPC):
**G01C 15/006**

(86) Internationale Anmeldenummer:
**PCT/EP2016/071562**

(87) Internationale Veröffentlichungsnummer:
**WO 2017/042399 (16.03.2017 Gazette 2017/11)**

(54) **POSITIONSEMPFINDLICHE OPTOELEKTRONISCHE DETEKTORANORDNUNG UND LASERSTRAHLEMPFÄNGER, DER DIESE VERWENDET**

POSITION-SENSITIVE OPTOELECTRONIC DETECTOR ARRANGEMENT, AND LASER BEAM RECEIVER USING SAME

SYSTÈME DÉTECTEUR OPTOÉLECTRONIQUE SENSIBLE À LA POSITION ET RÉCEPTEUR DE RAYON LASER UTILISANT CE DERNIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2015 DE 102015011934**

(43) Veröffentlichungstag der Anmeldung:
**18.07.2018 Patentblatt 2018/29**

(73) Patentinhaber: **AndroTec GmbH**
**67714 Waldfischbach-Burgalben (DE)**

(72) Erfinder: **EßLING, Mirko**
**55606 Kellenbach (DE)**

(74) Vertreter: **Pietruk, Claus Peter**
**Mozartstraße 21**
**79539 Lörrach (DE)**

(56) Entgegenhaltungen:
**WO-A1-02/090883** **US-A1- 2006 049 339**
**US-A1- 2014 203 172**

• -------------------------------------------- -------- **Zürcher ET AL: "Elektronik-und Messtechniklabor, Messbrücken A) Gleichstrom-Messbrücken 1 Anwendung und Eigenschaften", , 4. Februar 2000 (2000-02-04), XP055319989, Gefunden im Internet: URL:https://home.zhaw.ch/~spma/Scripts/Div erse EL Themen/Messbruecken.pdf [gefunden am 2016-11-16]**

**Beschreibung**

Die vorliegende Erfindung betrifft das oberbegrifflich Beanspruchte und befasst sich mit einer positionsempfindlichen optoelektronischen Detektoranordnung zur örtlichen Auflösung eines Lichtstrahlempfangs.

Positionsempfindliche optoelektronische Detektoranordnungen finden heute bereits in vielfältigen Bereichen Anwendung.

Fast synonym mit diesem Begriff sind seit vielen Jahren zum Stand der Technik gehörende Lateraleffekt-Photodioden (deshalb oft auch Position Sensitive Diode/Device oder kurz PSD genannt). Diese Bauelemente bestehen aus einer sehr einfachen Struktur eines lichtempfindlichen PIN-Halbleiterdiodenchips, der eine Widerstandsschicht besitzt, die dazu verwendet werden kann, den Fotostrom abhängig zum Auftreffpunkt eines vorzugsweise punktförmigen Lichtstrahles lateral auf zwei (1D-PSD) oder vier (2D-PSD) Elektroden am Rand des Chips aufzuteilen. Aus dem Verhältnis der Ströme dieser Elektroden kann dann relativ unabhängig von der Signalstärke des Lichtpunktes auf dessen Position auf dem Chip geschlossen werden. Beispiele für einen 2D-PSD finden sich in (G.P. Petersson and L.E. Lindholm. Position sensitive detector with high linearity. IEEE Journal of Solid State Circuit, SC13(3):392, 1978). Ein Beispiel für einen 1D-PSD findet sich in US 5,869,834. Ein solcher 1D-PSD ist auch in Fig.la (Stand der Technik) gezeigt.

Anwendung finden solche PSDs z.B. in Verbindung mit optischen Linsensystemen für die kontaktlose optische Bestimmung einer Distanz zu einem Objekt mittels Laser-Triangulation oder direkt bestrahlt zum hochpräzisen Ausrichten von Maschinenbetten mittels Laser-Leitstrahlen etc.

Der wesentliche Vorteil der Lateraleffekt-Photodioden liegt darin begründet, dass bei optimalen Randbedingungen und günstigen Anwendungen z.T. extrem hohe Ortsauflösungen bis in den $\mu$m-Bereich hinunter erzielt werden können. Die absolute Genauigkeit ist erheblich schlechter, insbesondere auch, da die Positionsgenauigkeit oft von der daran angeschlossenen Auswerteelektronik, deren Drifteffekten oder Störlicht dominiert werden.

Durch die üblicherweise hohen Flächenwiderstände bedingt, sättigen solche Sensoren trotz Vorspannung mit relativ hohen Spannungen jedoch recht früh und eignen sich deshalb nur bedingt dafür, um ohne größere optische Filtermaßnahmen, wie z.B. schmalbandige dielektrische optische Bandpassfilter, in direktem Sonnenlicht eingesetzt zu werden.

Um dieses Problem zu minimieren und um die Auflösung weiter zu steigern, wurden eindimensionale PSDs vorgeschlagen, die mehr als zwei Elektroden als Anzapfungen der Widerstandsfläche vorsehen, die vorzugsweise äquidistant über die Detektorlänge angeordnet sind. Dadurch ist es z.B. möglich durch Verwendung von vier statt zwei Elektroden, die internen Spannungsabfälle durch DC-Lichtanteile an der Widerstandsschicht um den Faktor drei zu senken und damit die Sättigungsgrenze bei gleicher Vorspannung zu verdreifachen. Eine solche Anordnung wurde in (Huai-Dong Ding and M. Idesawa. Multi-Resolution Image Position Sensing Characteristics of R-HPSD. Journal of Robotics and Mechatronics, 5(2): 122-129, 1993) vorgeschlagen und ist in Fig.lb (Stand der Technik) symbolisch dargestellt.

Wo Laserstrahlen zur Vermessung eingesetzt werden, sind Laserstrahlempfänger nötig. Ein typischer Einsatzbereich ist beispielsweise der Empfang von Laserlicht aus den auf Baustellen, in Industrieanwendungen und dergleichen verwendeten Rotations- und Linienlasern. Mit diesen wird Laserlicht abgestrahlt, beispielsweise als ein rotierender oder anders bewegter, im Querschnitt punktförmiger Strahl, als modulierter Laserfächer, der räumlich statisch oder bewegt sein kann, oder als modulierte Laserebene, die mittels Kegelspiegeln aufgefächert sein kann. Um diese Strahlung auch in großer Entfernung und unter ungünstigen Bedingungen noch zur Vermessung verwenden zu können, bedarf es spezieller Laserstrahlempfänger, die der Pulsform der empfangenen Lichtimpulse Rechnung tragen und diese vom Umgebungslicht und optischen Störeinflüssen zu unterscheiden vermögen.

Laserstrahlempfänger werden oft als sogenannte Handempfänger für Nivellier- und Ausrichtzwecke ausgeführt, manchmal auch als Maschinenempfänger zur Anbringung an die Arme oder Schilde von Baumaschinen zu Fernanzeige oder der automatischen Steuerung der Lage von Bearbeitungswerkzeugen z.B. beim Planieren von Straßenflächen.

All diesen Laserstrahlempfängern ist gemein, dass sie über eine mehr oder weniger lang ausgeführte linienförmige eindimensional ortsauflösende positionsempfindliche optoelektronische Detektoranordnung verfügen, die es ermöglicht, den Auftreffpunkt der Laserebene oder dergleichen auf diese zu bestimmen und damit die Lage des Laserlichtempfängers in Bezug auf diese Laserebene in mindestens einer Dimension zu bestimmen und anzuzeigen.

Bei Handempfängern finden typischerweise Detektoranordnungen mit einer Länge von 50..120mm Anwendung, wobei bei Maschinenempfängern typischerweise Längen von 120..1000mm dominieren.

Da es mit klassischen Lateraleffekt-Photodioden weitgehend unmöglich ist, solche Längen der Detektoranordnungen aus einem einzigen monolithischen Halbleiterchip zu fertigen, hat diese Art von Detektoranordnung bei den zuvor beschriebenen Laserstrahlempfängern keine unmittelbare kommerzielle Anwendung gefunden.

Vielmehr wurde in der Vergangenheit u.a. versucht, alternative positionsempfindliche elektrooptische Detektoranordnungen zu realisieren, die die positiven Eigenschaften der klassischen PSDs mehr oder weniger übernehmen, indem man deren Charakteristik durch lineare Anordnungen von einzelnen Photodioden und deren positionsabhängige Bahnwiderstände durch Gewichtungsnetzwerke, meistens Ketten von z.B. Widerständen, Induktivitäten oder Resonanzkreisen approximiert. Die Elektroden der klassischen PSD werden dann durch die Enden der Ketten ersetzt und die Gewichtung der Position der einzelnen Photodiodenelemente durch deren Anschluss an die entsprechenden Anzapfungen (Knoten) der Gewichtungsnetzwerke realisiert. Solche Anordnungen werden in der Literatur oft als diskrete PSD (oder kurz D-PSD) bezeichnet, da deren Positionscharakteristik für sehr dünne Lichtstrahlen nicht kontinuierlich, sondern in diskreten Stufen ausfällt, für breitere Strahldurchmesser aber in quasikontinuierliche Verläufe übergeht.

Ein Beispiel dafür ist in (Huai-Dong DING, M. IDESAWA and S. MATSUMOTO. A Comb-Structured PSD and Its Image Position Sensing Characteristics. Journal of the Society of Instrument and Control Engineers, 30(8):883-891, 1994) beschrieben und in der Fig.ld (Stand der Technik) der vorliegenden Anmeldung gezeigt.

Ein weiterer diskreter PSD wurde in US 2006/049339 und US7019278 beschrieben. Hier werden einige der positiven Eigenschaften von Fig.lb in einen diskreten PSD transferiert. Die Verwendung von mehr als zwei Anzapfungen (Ausgangssignalen) an den Gewichtungsnetzwerken hat hier ebenfalls den Vorteil, dass Spannungsabfälle an den Gewichtungsnetzwerken durch DC-Licht minimiert werden und dass bei mehr als zwei Anzapfungen zwischen dünnen Strahlen (Nutzsignal) und eher flächiger Beleuchtung, z.B. durch Blitzimpulse (Störsignale) unterschieden werden kann.

Ein weiterer D-PSD wurde in US2014/0203172 vorgeschlagen und in Fig.le (Stand der Technik) gezeigt. Hier werden zwei oder mehr D-PSD in Linie angeordnet. Die Vorteile entsprechen weitgehend denen der US 7,019,278, aber mit dem Nachteil, dass eine größere Anzahl Anzapfungen benötigt wird und dass ein stetiger Übergang der Positionscharakteristik zwischen den beiden D-PSDs schwierig bis unmöglich zu realisieren ist.

Ein anderer Weg wurde in US 9,121,695 verfolgt. Dieser Ansatz ist in Fig. 1c symbolisch gezeigt. Darin ist zu erkennen, dass es sich quasi um einen klassischen PSD gemäß Fig.lb handelt, der in kleinere Teile virtuell zerteilt wurde und diese an den benachbarten Elektroden wieder verbunden sind (Multi-PSD). Vorteilhaft gegenüber klassischen Ansätzen ist, dass diese Anordnung aus mehreren relativ kleinen PSD-Chips bestehen kann, die einfacher und damit preiswerter herzustellen sind und damit auch beliebig lange Detektoranordnungen erlauben. Diese Anordnung ist bei gleichen Eigenschaften aber im Vergleich zu anderen Ansätzen nachwievor sehr teuer, ohne wirkliche Vorteile zu besitzen.

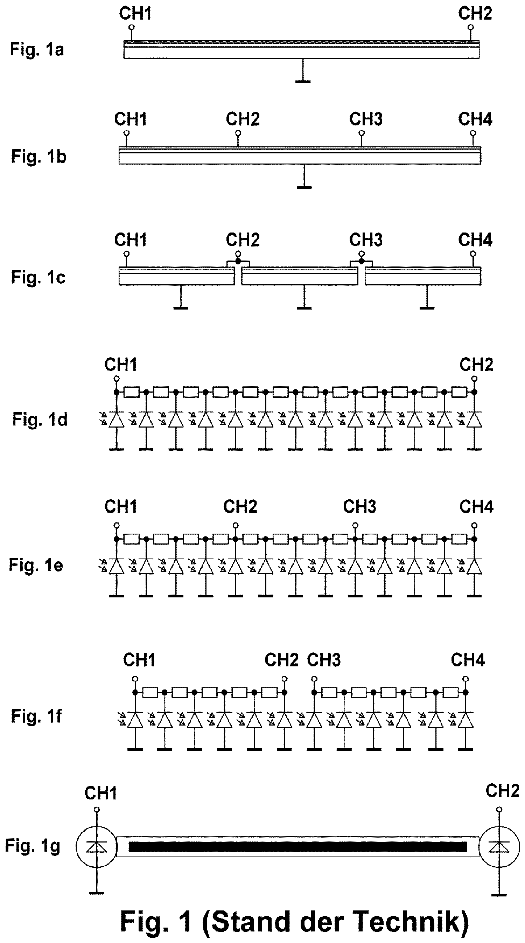

Allen bis zu diesem Punkt beschriebenen Ansätzen (klassische PSD, D-PSD, Multi-PSD, Fig. la bis Fig.1f) aus dem Stand der Technik ist ein gemeinsamer erheblicher Nachteil gemein, der deren Anwendbarkeit für AC-Anwendungen (gepulste oder modulierte Lichtstrahlen, gepulste Detektionsereignisse usw.) im Bereich der zuvor genannten Laserstrahlempfänger erheblich erschwert und deren Auslegung für hochgenaue Anwendungen sehr verteuert. Der Nachteil ist darin zu sehen, dass die Anzapfungen dieser Detektoranordnungen durch die Bahnwiderstände, bzw. Impedanzen der Gewichtungsnetzwerke in elektrischer Verbindung stehen und in Verbindung mit dem elektrischen Abschluss und die Sperrschichtkapazitäten der Detektorelemente über die Länge des Sensors frequenzabhängige Phasenverschiebungen bzw. frequenzabhängige Verstärkungen bzw. Erniedrigungen der Positionscharakteristik der Detektoranordnung ergeben, die ihrerseits noch von der Temperatur abhängig sind. Einem optimalen Abschluss der Anzapfungen (Ausgänge) der Detektoranordnungen durch die nachgeschalteten Schaltungsteile (Verstärkerstufen) kommt hier eine kritische Bewandnis zu, denn eine Schwankung über Temperatur oder Frequenz von nur wenigen Prozent kann eine präzise Positionsbestimmung unmöglich machen. Ein weiterer Nachteil liegt darin begründet, dass die Abschlussimpedanz dieser Ausgangssignale meistens auch noch die DC-Ströme durch DC-Licht aufnehmen muss. In diesem Falle sind Induktivitäten bzw. deren elektronische Äquivalente (NIC, Gyrator etc.) so auszulegen, dass eine Schwankung des DC-Stromes innerhalb üblicher Grenzen (Dunkelheit bis volle Sonneneinstrahlung) keine nennenswerte Veränderung der Positionscharakteristik hervorruft.

Hohe Genauigkeiten der Positionsbestimmung sind hier mit überschaubaren Kosten/geringer Komplexität sehr schwierig zu realisieren, d.h. Anwendungen mit AC-Lichtsignalen wie z.B. die zuvor beschriebenen Laserlichtempfänger sind nur vergleichsweise kostspielig zu realisieren.

Einen anderen Weg, der diesen gewichtigen Nachteil der hohen Anforderungen an die nachgeschalteten Abschlussstufen komplett vermeidet, ist der in US 7,394,527 der Anmelderin (dort in Fig.1g) gezeigte Lichtleiter-PSD, da hier die positionsabhängige Gewichtung mit optischen Mitteln (Lichtleiter mit Streumittel) realisiert wird und ein frequenzabhängiges Übersprechen zwischen den elektrischen Ausgangssignalen quasi vollständig ausgeschlossen ist. Aber auch dieser Ansatz ist mit Nachteilen behaftet. Diese bestehen u.a. in einer Wellenlängenabhängigkeit der Positionscharakteristik, die bei verschiedenen, am Markt üblichen Laserlichtquellen bis zu 2% der gemessenen Position betragen kann, sowie in einem vergleichsweise hohen Messwertrauschen durch unerwünscht ineffiziente Einkoppelung des Lichts und eine stark positionsabhängige Messgenauigkeit in Verbindung mit großen Lichtstrahldurchmessern, bedingt durch die inhärente, tanh()-Positionscharakteristik.

Deshalb wäre eine hochleistungsfähige, aber gleichzeitig preiswert zu realisierende positionsempfindliche optoelektronische Detektoranordnung wünschenswert, die die o.g. Nachteile der Detektoranordnungen aus dem Stand der Technik vermeidet und in einen Laserlichtempfänger integriert für ein gutes Preis-/Leistungsverhältnis sorgt.

Es wäre also insbesondere aus Kostengründen, sowie für günstiges Messwertrauschen unter Sonneneinstrahlung wünschenswert, eine diskrete positionsempfindliche optoelektronische Detektoranordnung vorzusehen.

Es wäre insbesondere wünschenswert, eine positionsempfindliche optoelektronische Detektoranordnung vorzusehen, bei der das frequenzabhängige Übersprechen zwischen den Anzapfungen (Signalausgängen) per se in einem weiten Nutzfrequenzbereich weitgehend vermieden wird.

Wünschenswert wäre auch, wenn die positionsempfindliche optoelektronische Detektoranordnung keine besonderen Anforderungen an den AC-mäßigen Abschluss der Signalausgänge stellt.

Wünschenswert wäre auch, wenn die positionsempfindliche optoelektronische Detektoranordnung keine Anforderungen daran stellt, ob die Ausgangssignale als Ströme oder Spannungen weiterverarbeitet werden und dass die DC-Ströme über separat zugeführte Vorspannungen ohne zusätzlichen Aufwand abgeleitet werden können.

Es wäre insbesondere wünschenswert, dass die positionsempfindliche optoelektronische Detektoranordnung auch für sehr dünne Lichtstrahlprofile eine sehr gute Linearität gewährleistet und mit großen Strahlprofildurchmessern keine über die üblichen Randprobleme hinausgehenden, zusätzlichen Messfehler liefert.

Ebenfalls wünschenswert wäre es, dass die Positionscharakteristik der positionsempfindlichen optoelektronischen Detektoranordnung in üblichen Grenzen der Anwendung weitestgehend frei von Einflüssen der Lichtwellenlänge ist.

Die Aufgabe der vorliegenden Erfindung besteht darin, eine positionsempfindliche optoelektronische Detektoranordnung anzugeben, die zumindest einige der vorgenannten Wünsche im Ganzen oder in Teilen erfüllt.

Die Aufgabe wird durch einen positionsempfindlichen Lichtstrahldetektor gemäß Anspruch 1, bzw. durch ein Verfahren gemäß Anspruch 14 zum Empfang eines rotierenden, eine Ebene überstreichenden Laserstrahls mit einem entsprechenden positionsempfindlichen Lichtstrahldetektor gelöst. Bevorzugte Ausführungsformen finden sich in den Unteransprüchen.

Somit wird ein positionsempfindlicher Lichtstrahldetektor gemäß Anspruch 1 mit Photodioden und mindestens zwei Gewichtungsnetzwerken, die jeweils mindestens einen Signalausgang und Netzwerk-Knoten aufweisen, vorgeschlagen, wobei vorgesehen ist, dass eine Mehrzahl der Netzwerk-Knoten des ersten Gewichtungsnetzwerkes für den Photodiodenanschluss derart vorgesehen ist, dass jeder dieser Knoten über eine Photodiode mit einem der Knoten des zweiten Gewichtungsnetzwerkes verbunden ist.

Dabei wird ausgenutzt, dass Photodioden mindestens eine Anode und eine Kathode aufweisen und die elektrische Signalströme in Anode und Kathode vom Betrag her zwar stets gleich sind, sich aber im Vorzeichen unterscheiden. Liegt demnach ein Photodiodenelement dieser Detektoranordnung an zwei verschiedenen Gewichtungsnetzwerken an - was der Fall ist, wenn es zwischen diesen liegt - so haben die aufgrund des Lichtstrahlempfangs (z.B. bei Empfang eines Lichtimpulses) bewirkten Ausgangssignale der Gewichtungsnetzwerke niemals gleiche Polarität, sondern immer entgegengesetzte Polarität (sofern nicht eines der Ausgangssignale Null ist, weil einer bestimmten Photodiode die Gewichtung Null zugeordnet ist).

Es sei besonders darauf hingewiesen, dass die hier beschriebenen eindimensionalen positionsempfindlichen optoelektronischen Detektoranordnungen des Standes der Technik, insbesondere die in Fig.1a bis Fig.lf gezeigten Anordnungen immer ihre Ausgangssignale entweder ausschließlich auf die Kathoden oder Anoden ihrer Detektorelemente beziehen. Es ist insbesondere im Stand der Technik nicht offenbart, wie und ob die Gewichtung auch möglich ist, wenn an ein Gewichtungsnetzwerk jeweils nur ein Signalausgang angeschlossen ist, d.h. dass mindestens zwei Gewichtungsnetzwerke vorgesehen sind, die nicht direkt miteinander verbunden sind.

Vorteilhaft ist weiter vorgesehen, dass an die Knoten für den Photodiodenanschluß des ersten Gewichtungsnetzwerkes nur Kathoden der Photodioden und an die Knoten für den Photodiodenanschluß des zweiten Gewichtungsnetzwerkes nur Anoden der Photodioden angeschlossen sind. Dies ist einsichtigerweise sowohl zur Vereinfachung der Auswertung als auch bei simultanem Empfang eines aufgeweiteten Lichtstrahles auf mehreren Photodioden nebeneinander vorteilhaft.

Es ist also vorteilhaft, wenn gewährleistet ist, dass die erfindungsgemäße Detektoranordnung sich dadurch auszeichnet, dass für eine Mehrzahl der Photodioden, bevorzugt für alle, sowohl deren Kathodenströme als auch deren Anodenströme zur örtlichen Gewichtung in verschiedenen Gewichtungsnetzwerken herangezogen werden bzw. dass mindestens an zwei der Gewichtungsnetzwerke entweder nur Kathoden oder Anoden der ihnen zugeordneten Photodioden angeschlossen sind.

In letzterem Falle ist in besonders hohem Maße gewährleistet, dass sich die Signale an den Ausgängen der Gewichtungsnetzwerke nicht gegenseitig beeinflussen, da sich zwischen den Gewichtungsnetzwerken lediglich in Sperrrichtung betriebene bzwl. leicht in Vorwärtsrichtung betriebene Photodiodensperrschichten befinden, deren Impedanzen sich somit üblicherweise in nicht störenden, hohen Wertebereichen befinden (üblicherweise viele Millionen Ohm). Bei Auslegung der Gewichtungsnetzwerke auf einem Impedanzniveau z.B. unter 1kOhm fällt dies kaum mehr ins Gewicht.

Vorteilhaft ist vorgesehen, dass zumindest eines der Gewichtungsnetzwerke als Kette gebildet ist, wobei an einem Ende der Kette der Signalausgang angeordnet ist und am anderen Ende der Kette eine Vorspannung angeschlossen ist.

Weiter ist vorteilhaft vorgesehen, dass die Gewichtungsnetzwerke als Kette von elektrischen Widerständen oder als Kette von Induktivitäten oder als Kette von Resonanzkreisen gebildet sind.

Eine weitere bevorzugte Variante sieht demnach unter anderem vor, dass die Gewichtungsnetzwerke als Ketten von entweder elektrischen Widerständen, Induktivitäten oder auf eine bestimmte Modulationsfrequenz der Lichtquelle abgestimmten Resonanzkreisen bestehen. In allen diesen Fällen kann an einem Punkt der Kette, vorzugsweise an deren einem Ende, eine Vorspannungsquelle angeschlossen sein, über die die DC-Signalströme aller angeschlossenen Photodioden zurückfließen können, die aber niederohmig genug ausgelegt ist, damit kein nennenswertes Übersprechen der daran über die Gewichtungsnetzwerke angeschlossenen Ausgänge gleicher Polarität zu erwarten ist.

Es sei zugleich erwähnt, dass es als vorteilhaft vorgeschlagen wird, wenn zwischen den Widerständen, Induktivitäten oder Resonanzkreisen der Kette die Knoten für den Photodiodenanschluss angeordnet sind. Dies ergibt eine sehr einfache Anordnung.

Es sei aber weiterhin erwähnt, dass erfindungsgemäß die Gewichtungsnetzwerke nicht unbedingt alle die gleiche Topologie, enthalten müssen, dass sie nicht alle gleich viele Einzelelemente enthalten müssen, dass sie nicht alle die gleichen bzw. gleichartigen Einzelelemente enthalten müssen, dass nicht alle Einzelelemente einander gleich sein müssen (d.h. z.B., dass unterschiedliche R-Werte in einem Gewichntungsnetzwerk möglich sind), dass nicht alle Einzelelemente gleichartig sein müssen (ein Netzwerk kann z.B. sowohl R-als auch L- als auch RC-Einzelelemente enthalten) und dass auch nicht an jeden Konten eines Gewichtungsnetzwerkes eine Photodiode angeschlossen sein muss.

Auch müssen nicht alle Photodioden eines positionsempfindlichen Lichtstrahldetektors wie vorgeschlagen an zwei Gewichtungsnetzwerke angeschlossen sein. Demnach können insbesondere Ausführungsformen auftreten, bei denen nicht an alle für Photodiodenanschluß vorgesehenen Knoten eines Gewichtungsnetzwerkes Photodioden so angeschlossen sind, dass diese an ihrem jeweils anderen Ende mit einem Knoten eines anderen Netzwerkes verbunden sind.

Vorteilhaft ist vorgesehen, dass die Gewichtungsnetzwerke als Ketten von elektrischen Widerständen ausgebildet sind, wobei dann bevorzugt vorgesehen ist, dass die Widerstände in der Kette gleiche Soll-Widerstandswerte besitzen; dies erleichtert die Auswertung, und zwar auch dann noch, wenn die Ist-Widerstandswerte - wie üblich - toleranzbedingt etwas variieren. Dabei sind für ausgedehnte Strahlen die Toleranzen sogar eher unkritisch, weil sich hier Toleranzen ausmitteln.

Vorteilhaft ist vorgesehen, dass die mindestens zwei Gewichtungsnetzwerke jeweils als Kette ausgebildet sind, wobei an einem Ende jeder Kette der Signalausgang angeordnet ist und am anderen Ende jeder Kette eine Vorspannung angeschlossen ist, und wobei an das erste und zweite Gewichtungsnetzwerk unterschiedliche Vorspannungen (Vaa, Vcc) angeschlossen werden.

Weiter ist vorteilhaft vorgesehen, dass bei dem bei Lichtstrahlempfang am Signalausgang des ersten Gewichtungsnetzwerkes eine erste Signalpolarität ansteht, die jener am Signalausgang des zweiten Gewichtungsnetzwerkes entgegengesetzt ist. Durch Anlegen von Vorspannungen ist dies ohne weiteres möglich.

Üblicherweise führen alle oder mindestens die Mehrzahl der Anoden der Photodiodenelemente in Gewichtungsnetzwerke, die an einem Ende in einen ersten, vorzugsweise eher negativeren Vorspannungsanschluss angeschlossen sind ("gemeinsame Anode" bzw. Anodenvorspannung Vaa).

Üblicherweise führen dann auch alle oder mindestens die Mehrzahl der Kathoden der Photodiodenelemente in Gewichtungsnetzwerke, die an einem Ende in einen zweiten, vorzugsweise eher positiveren Vorspannungsanschluss münden, d.h. daran angeschlossen sind ("gemeinsame Kathode" bzw. Kathodenvorspannung Vcc). Der Komparativ " positiver" für Vcc bezieht sich dabei auf das Potential Vaa. Das Potential Vcc ist also das positivere, das Potential Vaa das "negativere". Die Potentiale Vaa und Vcc sind dann ergo voneinander unterschiedlich.

Man kann also sagen, dass an die vorzugsweise zwei vorhandenen Vorspannungsanschlüsse die Betriebspannung angeschlossen wird, über die die Detektoranordnung mit dem notwendigen Betriebstrom versorgt wird, um zu verhindern, dass die Photodioden unter DC-Lichteinfluss saturieren. Die Photodioden sind also vorzugsweise spannungsmäßig in Sperrrichtung zu halten.

Einen nicht unbedingt bevorzugten, aber der Vollständigkeit halber erwähnten Sonderfall stellt Vaa = Vcc dar, bei dem die Photodioden unter Lichteinfluss leicht in Flussrichtung vorgespannt sind. In diesem Falle ist das Gewichtungsnetzwerk besonders niederohmig auszulegen, um die Einflüsse der Vorwärtsströme zu begrenzen.

Eine weitere bevorzugte Variante der Detektoranordnung kann auch vorsehen, dass bei mindestens einem Gewichtungsnetzwerk an die inneren Knoten der Kette jeweils entweder zwei Anoden oder zwei Kathoden von Photodioden angeschlossen sind. Dies ist vorteilhaft, wenn zwei Fotodioden in diesem Gewichtungsnetzwerk gleiche Gewichte zukommt.

Vorteilhaft ist wenigstens ein drittes Gewichtungsnetzwerk vorgesehen, wobei mindestens das zweite der mindestens drei Gewichtungsnetzwerke als Kette gebildet ist, die von dem Signalausgang und einem Versorgunsspannungseingang verschiedene, innere Knoten aufweist, wobei an mindestens einem dieser inneren Knoten der Kette entweder die Anoden oder die Kathoden zweier unterschiedlicher Photodioden angeschlossen sind, wobei der andere Pol der ersten dieser Photodioden mit einem Knoten der ersten Gewichtungsnetzwerken verbunden ist und wobei der andere Pol der zweiten dieser Photodioden mit einem Knoten des dritten Gewichtungsnetzwerkes verbunden ist. Es ist weiterhin bevorzugt, dass an einem zweiten Ende der Kette des Gewichtungsnetzwerkes eines der Ausgangssignale der Detektoranordnung abgegriffen wird.

Vorteilhaft ist vorgesehen, dass den Photodioden ein Strahlerfassungsverbesserungsmittel zur Verbesserung der Strahlerfassung zugeordnet ist, das bevorzugt so angeordnet ist, dass es den bei gegebenem Lichtrahldurchmesser auf die Photodioden fallenden Lichtfleck für den simultanen Empfang durch wenigstens zwei, bevorzugt mehr benachbarte Photodioden aufweitet.

Vorteilhaft ist weiter vorgesehen, dass das Strahlerfassungsverbesserungsmittel zumindest eine Lentikularfolie bei der Gehäuseoberseite und eine Lichtführstruktur zum Führen des von der Lentikularfolie transmittierten Lichtes herunter in das Gehäuseinnere zu den Photodioden umfasst. Die Lentikularfolie dient dazu, einen auftreffenden Lichtstrahl aufzuweiten, so dass mehrere Photodioden getroffen werden und ist somit wirkungsgleich einem Lichtstreumittel. Die Lichtführstruktur verhindert, dass quer zur Photodiodenreihe in flachem Winkel einfallende Strahlenanteile verloren gehen und somit die Empfindlichkeit sinkt.

Vorteilhaft ist weiter vorgesehen, dass das Strahlerfassungsverbesserungsmittel zusätzlich und/oder alternativ zur Lentikularfolie eine Streufolie umfasst.

Da dieser neue erfindungsgemäße Ansatz eine neuartige Variante eines diskreten PSD darstellt, sei erwähnt, dass auch dieser von einem Lichtstreumittel profitiert, welches beabstandet von der Empfangsfläche vorgesehen ist und das einen eintreffenden Strahl zumindestens derart aufweitet, dass gleichzeitig mehr als zwei Photodioden, die ja typisch in einer Reihe nebeneinander angeordnet sind, zumindestens etwas getroffen werden. Durch diese Art der Strahlaufweitung wird die Diskretisierung der Positionscharakteristik bei sehr dünnem Strahldurchmesser minimiert. Als Lichtstreumittel kommen neben Mikrolinsenarrays auch holographische Diffuser oder andere optische Streumittel in Frage. Die erwähnten Lentikularfolien werden dabei als Mikrolinsenarrays, die eine besondere Linsenform aufweisen, betrachtet.

Als vorteilhaft wird vorgeschlagen, dass eine Reihe von Photodioden nebeneinander vorgesehen ist, die Gewichtungsnetzwerke als Ketten ausgebildet sind und die in einer Reihe angeordneten Photodioden mit in der Kette aufeinander folgenden Knoten des Gewichtungsnetzwerkes verbunden sind. Die Photodioden liegen dabei bevorzugt geometrisch eng nebeneinander, bevorzugt aneinander angrenzend. Es wird als ausreichend für die Realisierung dieses Merkmals angesehen, wenn von jenen Photodioden des Lichtstrahldetektors, die eine bestimmte Kette bilden, zumindest einige so angeordnet sind, dass

von den in einer Reihe angeordneten Photodioden wenigstens einige mit der in der Kette aufeinander folgenden Knoten eines Gewichtungsnetzwerkes verbunden sind. Es ist möglich, dass mehrere Gewichtungsnetzwerke nebeneinander vorgesehen sind, z.B. mit Ketten aus 4 oder 8 gleichen Widerständen und an diese jeweils in der Reihe aufeinaderfolgende Photodioden angeschlossen sind. Es sei betont, dass es vorteilhaft, aber nicht zwingend ist, wenn die Reihe aufeinanderfolgender Photodioden eine Reihe unmittelbar benachbarter Photodioden ist, d.h. keine Photodioden in der Reihe aufeinanderfolgender Photodioden vorhanden sind, die nicht an das gleiche Gewichtungsnetzwerk angeschlossen sind.

Besonders bevorzugt ist die Anwendung des erfindungsgemäßen Lichtstrahldetektors, wenn dieser in einen Lichtstrahlempfänger integriert ist, also insbesondere auch in einen der auf Baustellen benötigten Laserhandempfänger oder Maschinenempfänger zur Empfang von Baulasern. In beiden Anwendungen optimiert der erfindungsgemäße Lichtstrahldetektor die Messgenauigkeit und die Gestehungskosten.

Offenbart wird auch ein Verfahren gemäß Anspruch 14 zum Empfang eines rotierenden, eine Ebene überstreichenden Laserstrahls mit dem erfindungsgemäßen Lichtstrahldetektor, wobei vorgesehen ist, dass die simultan erhaltenen Kathodenströme und Anodenströme der mit den verschiedenen Gewichtungsnetzwerken verbundenen Photodioden ausgewertet werden, um die Position des Strahlempfangs zu bestimmen. Ebenfalls besonders bevorzugt ist die Nutzung dieser Detektoranordnung in Verbindung mit den folgenden Erfindungen der Anmelderin: DE 11 2013 004 987 (Kombinationslaserempfänger), DE 10 2013 019 532 (Laserempfänger mit Störsignalunterdrückung), US 7,394,527 (Laserpeak-Sampling) und US 7,724,352 (alternative Signalverarbeitung).

Die Erfindung wird im Folgenden nur beispielhaft anhand der Zeichnung beschrieben. In dieser ist dargestellt durch:

Fig. 1    Verschiedene beispielhafte Detektoranordnungen aus dem Stand der Technik;
Fig. 2    vier Schaltungen von erfindungsgemäßen Detektoranordnungen;
Fig. 3    eine Schaltung einer besonders bevorzugten erfindungsgemäßen Detektoranordnung;
Fig. 4    eine Detektoranordnung mit der Schaltung aus Fig. 3 sowie eingezeichnetem Lichtstrahl, Vorspannung und Ausgangssignalen; zu der Detektoranordnung von Fig.4, die bei Empfang eines Lichtstrahles von kleinem Strahldurchmesser auf den Photodioden erhaltenen
Fig. 5a    Linearitätsfehler p-pc in Abhängigkeit von der realen Lichtstrahlposition p entlang der Länge L der Reihe nebeneinander im Abstand d angeordneter Photodioden;
Fig. 5b    den an den Gewichtungsnetzwerk-Ausgängen 5, 9, 10 bzw. 6 erfassten Verlauf der Ströme i1, i2, i3, i4 idealisiert für einen Fall, bei dem die Abstände zwischen den Photodiodenflächen Null sind und der Strahl einen verschwindend kleinen Durchmesser besitzt, wobei angesichts der Tatsache, dass vier Stromkurven aus Gründen der Übersichtlichkeit in eine gemeinsame Graphikdarstellung eingezeichnet sind, zur Vermeidung von Unklarheiten angemerkt sei, dass

i1 als dünne Linie eingezeichnet ist, vom Maximalwert in Stufen auf Null abfällt und dann konstant auf Null bleibt;

i2 in dicker Linie eingezeichnet ist, von Null in Stufen auf einen Minimalwert abfällt, dann in Stufen wieder auf Null ansteigt und dann konstant auf Null bleibt;

i3 in dicker Linie eingezeichnet ist, zunächst konstant Null ist, dann von Null in Stufen auf einen Maximalwert ansteigt und dann von diesem Maximalwert in Stufen wieder auf Null abfällt;

i4 in dünner Linie eingezeichnet ist, zunächst konstant Null ist und dann von Null in Stufen auf sein Minimum abfällt;

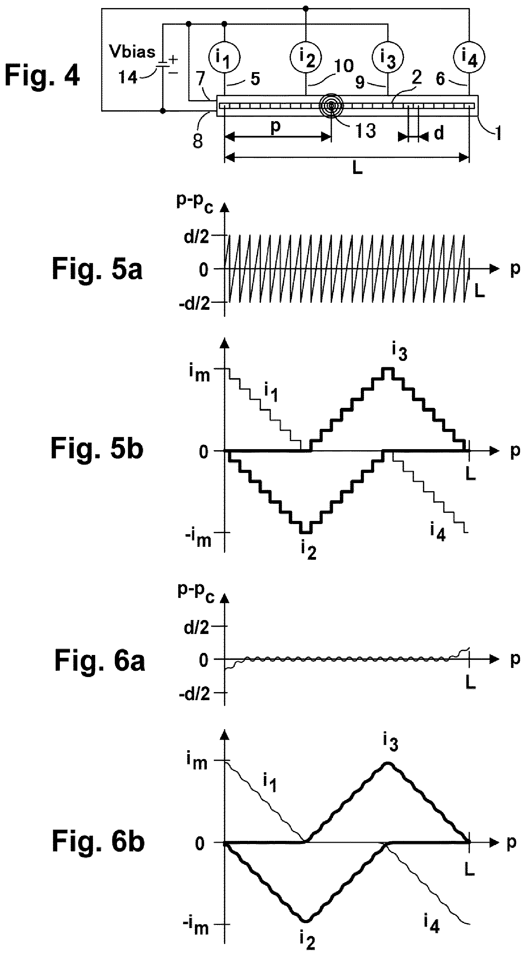

Fig. 6    den Fig. 5a bzw. 5b entspricht, aber die entsprechenden Kurven für den Empfang eines Lichtstrahls mit großem Strahldurchmesser zeigt;

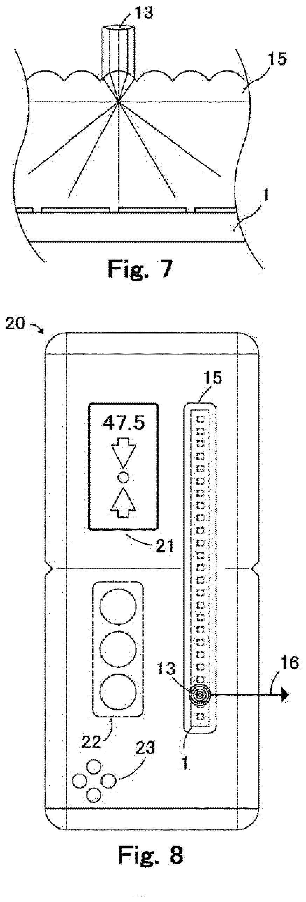

Fig. 7    ein seitlicher Ausschnitt einer erfindungsgemäßen Detektoranordnung mit Streumittel zur Verbesserung der mit kleinen Strahlprofildurchmessern erzielbaren Linearität;

Fig. 8    ein Laserstrahlempfänger, der die Detektoranordnung aus Fig. 4 verwendet;

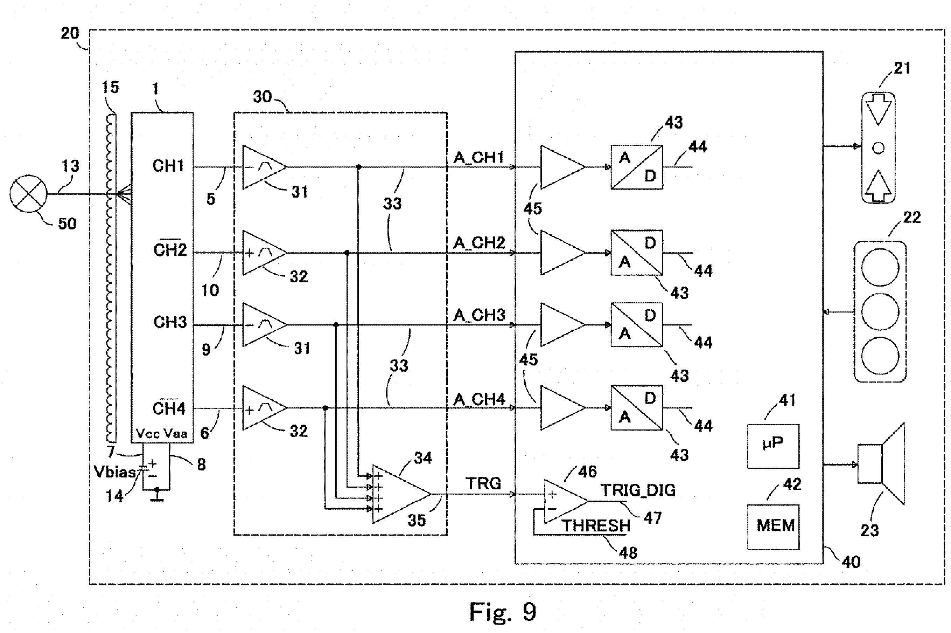

Fig. 9    ein Blockschaltbild des Laserstrahlempfängers aus Fig. 8;

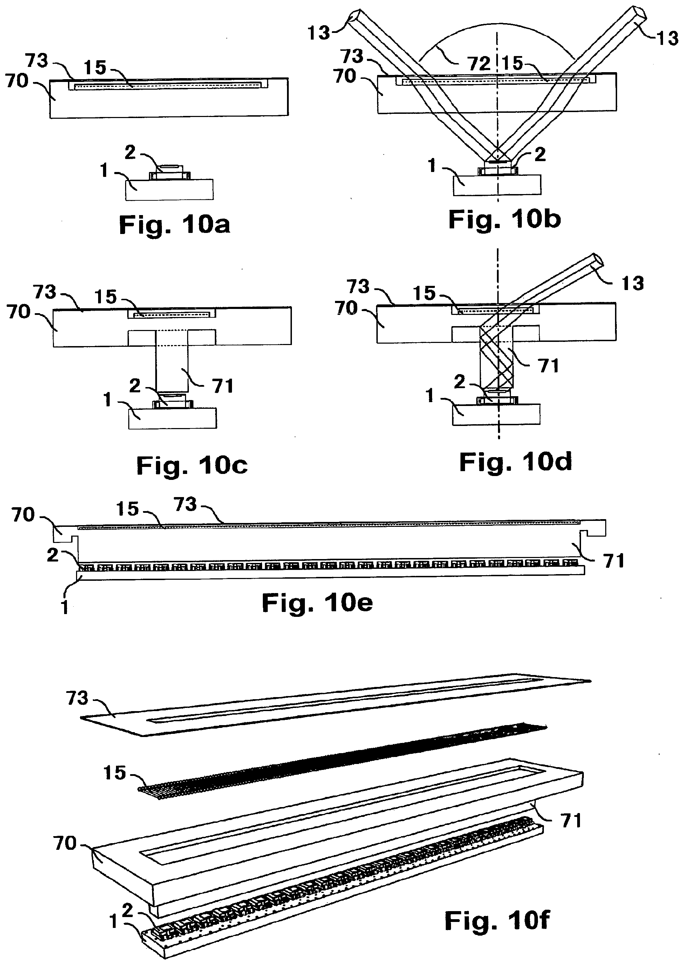

Fig. 10a    eine Detektoranordnung nach dem Stand der Technik mit bekanntem, von den Photodioden beabstandeten Streumittel (vgl. z.B. aus dem Stand der Technik bekannte Bosch-Empfänger) aus US 2014/0203172 A1;

Fig. 10b    die Detektoranordnung nach dem Stand der Technik von Fig. 10a mit eintreffenden seitlichen Strahlen und Öffnungswinkel;

Fig. 10c    eine erfindungsgemäße Detektoranordnung mit Streumittel und bevorzugt zu verwendendem, zugehörigem Lichtführstruktur (Prisma);

Fig. 10d    eine Detektoranordnung gem. Fig. 10c, mit eingezeichnetem, seitlich eintreffenden Strahl.

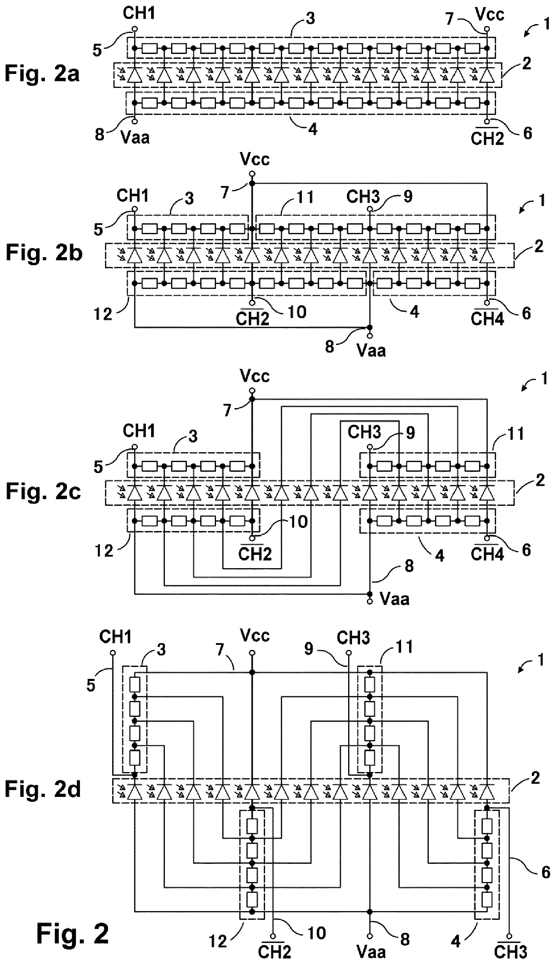

Fig. 2 zeigt vier mögliche Varianten der allgemein mit 1 bezeichneten, positionsempfindlichen optoelektronischen Detektionsanordnung 1 bzw. des positionsempfindlichen Lichtstrahldetektors 1 der Erfindung.

Fig. 2a zeigt eine besonders einfache Variante mit zwei Ausgangssignal-Ausgängen 5 und 6 an diesen zugeordneten kettenförmigen Gewichtungsnetzwerken 3 und 4, die hier wie möglich und bevorzugt aufgebaut sind aus Widerständen mit einander gleichen Widerstandswerten.

Die Widerstandswerte innerhalb der Kette können ohne weiteres so gewählt werden, dass ein auf einen Anwendungsfall akzeptables Messwertrauschen, eine nicht zu hohe Leistungsaufnahme und ein günstiger Sättigungspunkt bei DC-Licht erhalten wird.

An die Gewichtungsnetzwerke angeschlossen sind dreizehn Photodioden 2. Das Gewichtungsnetzwerk 3 ist auf die positive Vorspannung Vcc, angelegt bei Bezugszahl 7, bezogen. Wenn man gleiche Widerstandswerte zugrundelegt, betragen die Gewichtungsfaktoren der Knoten der Kette gemäß der technischen Stromrichtung von links nach rechts:

$$13/13 = 1, \ 12/13, \ 11/13, \ ... \ , \ 2/13, \ 1/13, \ 0/13 = 0.$$

Für das auf die negative Vorspannung Vaa (eingespeist bei Bezugszahl 8) bezogene Gewichtungsnetzwerk 4 betragen die Gewichtungsfaktoren der Knoten der Kette von links nach rechts bei wiederum gleichen Widerstandswerten

$$-0/13 = 0, \ -1/13, \ -2/13, \ ... \ , \ -11/13, \ -12/13, \ -13/13 = -1.$$

Diese Gewichtungsnetzwerke sind einfach aufgebaut und vorteilhaft für das Verständnis. Nun können zwar mit dieser Topologie beliebig lange Detektoranordnungen realisiert werden, aber es ist zweckmäßig und vorteilhaft im Sinne von Messwertrauschen, Leistungsaufnahme und Sättigungspunkt bei DC-Licht Änderungen vorzunehmen.

Eine direkt aus Fig. 2a abgeleitete Detektoranordnung ist dazu in Fig. 2b; zu sehen, es wurden lediglich paarweise Ausgänge 9 und 10 und an der gegenüberliegenden Elektrode der Photodiode am Ausgang die dazu passende Vorspannung 8 und 7 angeschlossen.

Mit anderen Worten wurde die Anode einer weiteren der in Fig. 2b gezeigten Reihe gezeigten Photodioden zusätzlich an die Anodenversorgungsspannung Vaa gelegt. Es sind jetzt also zwei Photodioden in der Reihe vorhanden, deren Anode an die Versorgunsspannung gelegt ist, nämlich an den Punkten 12 und 8. Eine dieser Photodioden ist entfernt vom Rand der Reihe nahe zur Mitte hin angeordnet; es wird sich aber nicht zwingend um die Photodiode genau in der Mitte der Reihe handeln, wie das Beispiel von Fig. 2 an einer bevorzugten Ausführungsform zeigt. Auch bei dieser entfernt vom Rand angeordneten Photodiode ist auf dem Gewichtungsnetzwerk, an das die Kathodenseite angeschlossen ist, ein Signalausgangs-Anschluß vorgesehen, bezeichnet mit 9 / CH3.

Genauso ist bei einer anderen, vom Rand entfernten Photodiode die Kathode an Vcc gelegt und an deren Anode am gegenüberliegend Gewichtungsnetzwerk wird ein Signal-Anschluss 10 vorgesehen.

Die so gebildete Struktur kann verstanden werden als entweder ein Gewichtungsnetzwerk auf Photodioden-Anodenseite, das mit einem Gewichtungsnetzwerk auf der Photodioden-Kathodenseite zusammenwirkt, wobei bei dieser Betrachungsweise jedes der Gewichtungsnetzwerk je 12 Widerstände, je 2 Eingangspunkte für Vcc bzw. Vaa sowie je 2 Abgriffspunkten für die Ausgangssignale (5, 9 bzw. 10, 4 für CH1, CH3 bzw. CH2 und CH4) aufweist, oder aber als eine Kombination mehrerer Gewichtungsnetzwerke, bei welchen in jedes Gewichtungsnetzwerk eine Versorgungsspannung eingespeist wird, am anderen Ende jedes Gewichtungsnetzwerkes ein Signal erhalten wird und an jedes der Gewichtungsnetzwerke entweder nur Photodioden-Anoden oder nur Photodioden -Kathoden angeschlossen sind, so dass die Gewichtungsnetzwerke über Photodioden verbunden sind.

Die Anordnung ist schon vorteilhaft mit Bezug auf Messwertrauschen, Leistungsaufnahme und Sätigungsverhalten bei DC-Licht, aber die Anordnung von Fig. 2b kann weiter vereinfacht werden.

Dies sei erläutert anhand der Betrachtungsweise, nach welcher auf der Anodenseite der Photodioden ein durchgehendes Gewichtungsnetzwerk 12 gebildet ist und auf der Kathodenseite ein Gewichtungsnetzwerk 11. Bei dieser Betrachtung haben die Gewichtungsnetzwerke 11 bzw. 12 für die in Reihe angeschlossenen Photodioden keine monoton in eine Richtung fallenden bzw. steigenden Gewichte, sondern haben an einer Stelle ein Maximum bzw. Minimum. So betragen die Gewichtungsfaktoren beim Gewichtungsnetzwerk 11 von links nach rechts:

$$0/5 = 0, \; 1/5, \; 2/5, \; 4/5, \; 5/5 = 1, \; 4/5, \; 3/5, \; 2/5, \; 1/5, \; 0/5 = 0$$

Beim Gewichtungsnetzwerk 12 sind dies von links nach rechts:
-0/5, -1/5, -2/5, -4/5, -5/5, -4/5, -3/5, -2/5, -1/5, -0/5

Es ist dabei zu erkennen, dass bis auf die Gewichtung 5/5 bzw. -5/5 alle Gewichte in diesen Reihen doppelt vorkommen. Die jetzt vorgeschlagene Vereinfachung nutzt die Möglichkeit, Photodioden gleicher Gewichtung einfach auf den gleichen Knoten zu führen und die dadurch freiwerdenden, d.h. nicht benötigten Widerstände wegzulassen.

Eine vereinfachte Detektoranordnung ist in Fig. 2c zu sehen. Der direkte Vergleich zwischen Fig. 2b und Fig.2 c zeigt, wie Fig. 2c durch Weglassen bestimmer Widerstände und Vorsehen bestimmter Leitungen aus der Anordnung von Fig. 2b abgeleitet ist.

Es resultiert durch diese Vereinfachung eine Anordnung mit Gewichtungsnetzwerken, die jeweils kleiner sind als jene von Fig.2a, wobei die Verbindungen zu den Photodioden anders angeordnet sind und mehr Anschlüsse als in Fog. 2 vorgesehen sind.

Eine zu Fig. 2c topologisch identische Detektoranordnung ist in Fig. 2d zu sehen. Hier wurden zum besseren Verständnis die Gewichtungsnetzwerke anders angeordnet, um die einfache beliebige Skalierbarkeit dieser Anordnung augenfälliger zu machen.

Eine Skalierung ist auf unterschiedliche Arten möglich.

Es können z.B. schrittweise links und/oder rechts jeweils ein Gewichtungsnetzwerk, ein Ausgang, sowie vier weitere Photodioden angehängt werden, um die Detektoranordnung dadurch schrittweise beliebig zu verlängern. Daraus wird verständlich, dass auch eine ungerade Anzahl von Ausgängen möglich ist.

Die Zahl der Widerstände in Fig. 2c und Fig. 2d wurde im Übrigen nicht zufällig gewählt, sondern entspricht einer bevorzugten, wenn auch nicht zwingend erforderlichen Ausführung. Es sind nämlich als SMT-Bauteile Widerstandsnetzwerke mit vier Widerständen verfügbar; damit muss bei diskretem Aufbau auf einer Platine pro hinzugefügten vier Photodioden nur ein Widerstandsnetzwerk bestückt werden.

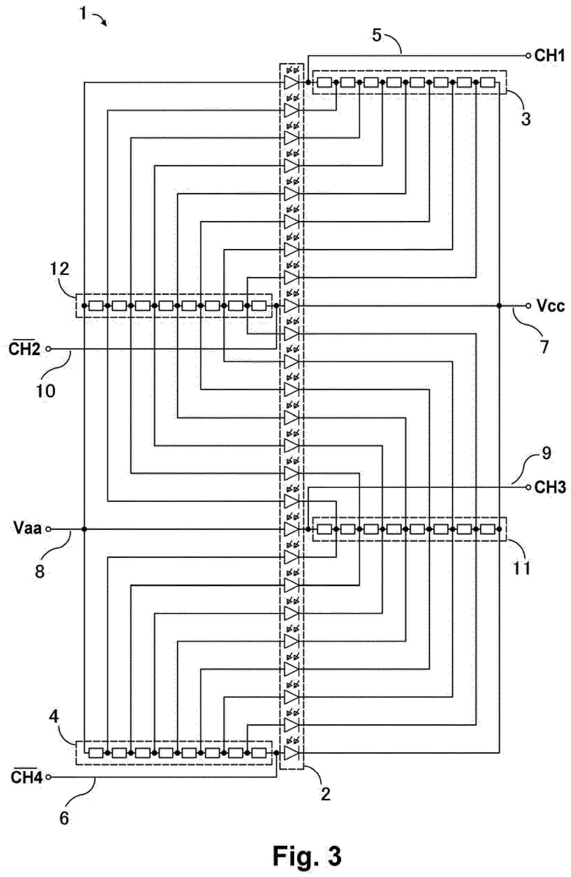

Fig. 3 zeigt eine weitere Möglichkeit der Skalierung. Fig. 3 entspricht Fig. 2d eng, auch wenn die Photodiodenreihe in Fig. 3 vertikal und nicht horizontal eingezeichnet wurde und die Gewichtungsnetzwerke nach Fig. 3 mehr Widerstände als jene nach Fig. 2d besitzen, so dass an jedes Gewichtungsnetzwerk von Fig. 3 auch mehr Photodioden angeschlossen sind als bei Fig. 2d.

Die in Fig. 3 gezeigte besonders bevorzugte Detektoranordnung 1 enthält somit einen Anschluss für eine positive Vorspannung 7 und einen Anschluss für eine negative Vorspannung 8. Die Detektoranordnung besitzt vier Ausgänge, die bei Bezugszahlen 5, 10, 9, 6 gezeigt sind. Die vier Gewichtungsnetzwerke 3,12,11,4 bestehen nun aus acht Einzelwiderständen, die in einer bevorzugten baulichen Ausführung in einem SMT-Bauteil untergebracht sind. Zu erkennen ist, dass für die physikalische Verdrahtung im Layout maximal zehn Signale jeweils parallel laufen müssen. Dies kann aber sehr leicht mit einer Multilayerplatine und vier Lagen realisiert werden, ohne die physische Breite des Sensormoduls über die Breite der Photodioden hinaus nennenswert zu verbreitern. Es finden nach Fig. 3 insgesamt fünfundzwanzig Photodioden 2 Verwendung.

Fig. 4 zeigt nun symbolisch die Detektoranordnung mit eingezeichnetem auftreffenden Lichtstrahl 13, dessen Strahlprofil in Form von Kreisen angedeutet ist. Eingezeichnet sind in Fig. 4 die Vorspannungsquelle Vbias 14 zur Bereitstellung von Vcc und Vaa und die an den Anschlüssen 5, 10, 9, 6 anstehenden Ausgangssignale i1 bis i4. Weiterhin werden die Strahlposition p und die lineare Länge L der Detektoranordnung, sowie der Rasterabstand der Photodioden d gezeigt.

Die Signale sollen hier als Ausgangsströme abgegriffen werden. Aus den Werten von $i_1$, $i_2$, $i_3$, $i_4$ kann mit Hilfe folgender Formel (i) die gemessene Strahlposition $p_c$ bestimmt werden:

$$(i) \qquad p_c = \frac{L}{2} \left( 1 - \frac{3i_1 - i_2 - i_3 + 3i_4}{3(i_1 - i_2 + i_3 - i_4)} \right)$$

Das Diagram Fig. 5b zeigt nun den Verlauf der Ströme $i_1$, $i_2$, $i_3$, $i_4$ für einen ideal dünnen Strahl mit verschwindendem Durchmesser (Durchmesser Null) und unter der vereinfachenden Annahme, dass die Lücken zwischen den Photodioden ebenfalls null sind.

Angesichts der Tatsache, dass vier Stromkurven aus Gründen der Übersichtlichkeit in eine gemeinsame Graphikdarstellung eingezeichnet sind, sei noch einmal zur Vermeidung von Unklarheiten angemerkt, dass i1 als dünne Linie eingezeichnet ist, vom Maximalwert in Stufen auf Null abfällt und dann konstant auf Null bleibt; i2 in dicker Linie eingezeichnet ist, von Null in Stufen auf einen Minimalwert abfällt, dann in Stufen wieder auf Null ansteigt und dann konstant auf Null bleibt; i3 in dicker Linie eingezeichnet ist, zunächst konstant Null ist, dann von Null in Stufen auf einen Maximalwert ansteigt und dann von diesem Maximalwert in Stufen wieder auf Null abfällt; i4 in dünner Linie eingezeichnet ist, zunächst konstant Null ist und dann von Null in Stufen auf sein Minimum abfällt.

Es ist deutlich die Stufung der jeweiligen Ströme, d.h. die Diskretisierung durch die diskreten Photodiodenflächen zu erkennen.

Das Diagramm in Fig. 5a zeigt den Linearitätsfehler $p-p_c$ in Abhängigkeit von der realen Lichtstrahlposition p. Hier zeigt sich ein Linearitätsfehler von +-d/2. Der Linearitätsfehler schwankt zwischen Minima und Maxima - und zwar in ausgeprägter Weise bei den vorstehenden Annahmen (Photodiodenabstand und Strahldurchmesser jeweils Null).

Für einen realen Strahl mit größerem Strahldurchmesser verbessert sich der Kurvenverlauf, wie die Diagramme von Fig. 6a und 6b zeigen. Die Diagramme von Fig. 6a und 6b sind beide unter der theoretischen Annahme bestimmt, dass die Lücken zwischen den Photodioden immer noch - wie bei Fig. 5- null sind, aber das Strahlprofil jetzt einen größeren glockenförmigem Verlauf entsprechend einem realen Profil aufweist. Die Fig. 5 und 6 haben untereinander vergleichbare Skalen.

Das Diagram Fig. 6b zeigt, dass für die getroffenen Annahmen im Verlauf der Ströme $i_1$, $i_2$, $i_3$, $i_4$ die Stufen eindeutig herausgemittelt sind.

In Fig. 6a ist deutlich zu erkennen, dass der Linearitätsfehlers durch den breiten Strahl mit dem glockenförmigen Strahlprofil deutlich verbessert ist. Es sind zwar noch Linearitätsfehler am Rand zu erkennen, die dadurch bedingt sind, dass das Strahlprofil am Rand teilweise abgeschattet wird. Dieser Effekt ist unvermeidbar, kann aber ohne weiteres durch geeignete Kalibrierung kompensiert werden.

Es ist also sinnvoll, wenn auch nicht zwingend für die gezeigte Anordnung, ein zu kleines Strahlprofil hinreichend zu vergrößern.

Fig. 7 zeigt eine diesbezüglich vorteilhafte Anordnung. Dargestellt ist, wie ein Lichtstrahl 13 auf ein Streumittel 15 trifft, das oberhalb und etwas beabstandet von den lichtempfindlichen Bereichen der Photodioden der Detektoranordnung 1 angeordnet ist. Mit dieser Anordnung kann durch das im Strahlengang des Lichtstrahls 13 vor der Detektoranordnung 1 beabstandet angeodnete Streumittel 15 ein kleines Strahlprofil bis zum Auftreffen auf die Photodioden vergrößert, d.h. aufgeweitet werden. Als Streumittel werden Mikrolinsenarrays mit Zylinderlinsen bevorzugt, es können aber auch andere Streumittel verwendet werden. So stehen eine Vielzahl anderer transmissiver Streufolien/-fenster bereit.

Durch diese Maßnahme stellt sich in der Praxis auch bei sehr dünnen Strahlen eine deutliche Verbesserung des Linearitätsfehlers ein, ähnlich der - und zum Teil noch besser als die - Verbesserung zwischen Fig. 5b und Fig. 6b.

Fig.8 zeigt einen besonders bevorzugten vollständigen Laserstrahlempfänger, wie er auf Baustellen und dergl. einsetzbar ist. Dieser Laserstrahlempfänger ist in Vorderansicht gezeigt und hat die Form eines Handempfängers 20 mit einer Anzeigeeinheit 21 zur Darstellung der Messwerte als Zahlenwert und als Pfeildarstellung, einer Tastatur 22 zur Bedienung durch den Benutzer, einem Lautsprecher 23 für akustische Signale und einem im Sensorfenster angebrachten Streumittel 15 und die dahinterliegende Detektoranordnung 1 aus Fig.3. Ein Laserstrahl 13 überstreicht das im Sensorfenster angebrachte Streumittel 15 und die dahinterliegende Detektoranordnung 1 aus Fig. 3 in Richtung 16.

In Fig. 9 ist ein Blockschaltbild dieses besonders bevorzugten Laserstrahlempfängers 20 aus Fig. 8 dargestellt, der die positionsempfindliche optoelektronische Detektoranordnung 1 aus Fig. 3 umfasst.

Der Empfang eines Laserstrahls 13 aus einem Baulaser 50 funktioniert folgendermaßen:

Zuerst wird der Laserstrahlempfänger so auf die Strahlebene gebracht, dass der Laserstrahl auf das Streumittel 15 trifft, dort aufgeweitet wird und dann auf die Detektoranordnung 1 gelangt.

Mit dieser Detektoranordnung 1 werden vier Signale 5, 10, 9, 6 erzeugt, die auf eine Verstärker- und Signalkonditioniereinheit 30 geleitet werden. Darin werden in den elektronischen Komponenten 31 und 32 die Signale verstärkt, vom DC-Offset befreit und die Polarität korrigiert, d.h. die Verstärkerstufen der elektronischen Komponenten 31 und 32 sind entweder invertierend 31 oder nicht invertierend 32 ausgeführt.

Die in und mit den elektronischen Komponenten 31 und 32 generierten Signale 33 werden an die Auswerteeinheit 40 weitergeleitet. Diese enthält vier separate Hochgeschwindigkeits- A/D-Wandler, die die elektrischen Signale 33 in digitale Datenströme umwandeln. Dass anstelle der anschaulichkeitshalber eingezeichneten vier separaten Hochgeschwindigkeits- A/D-Wandler ein einzelner, gemultiplexter Wandler vorgesehen sein könnte, sei vollständigkeitshalber erwähnt.

Die digitalen Datenströme werden von einer Auswerteeinheit 41 ständig in Ringpuffern 42 gespeichert, bis die Auswerteeinheit 41 die Speicherung stoppt, was der Fall ist, sobald der Ansteuerung 41 durch ein Triggersignal 47 signalisiert wird, dass eine Detektionsschwelle 48 überschritten wurde, und sobald noch eine bestimmte Delayzeit nach dem Trigger abgewartet wurde. Das Triggersignal 47, das in die Ansteuerung 41 gespeist wird, ist ein digitales Triggersignal, das erzeugt wird, wenn ein analoges Signal (TRG) eine Schwelle überschreitet. Das analoge Signal (TRG) wird wiederum durch Aufsummieren der konditionierten analogen Signale 33 erzeugt. Das digitale Triggersignal wird also letztlich immer dann erzeugt, wenn zumindest einer der Photodiodenströme hinreichend groß ist.

Es liegt damit das Laserereignis ähnlich einem Digitalspeicheroszilloskop im Speicher der Auswerteeinheit, so dass der Mikroprozessor die digitalen Äquivalente der Signalamplituden durch Peakintegration, Peakdetektion, RMS-Detektion oder dergleichen rechnerisch bestimmen und sodann gemäß (i) einen Positionsmesswert errechnen kann, der unter Verwendung von Kalibrierdaten aus dem Speicher 42 korrigiert wird und sodann nach der Korrektur als Pfeildarstellung oder numerisch über die Anzeige 21 angezeigt werden kann.

Üblicherweise können die in Fig, 9 dargestellten Verstärkerstufen 45 weggelassen werden oder fest auf 1x-Verstärkung programmiert werden. Die Auswerteeinheit ist aber heute als Mikrokontroller praktisch ausführbar und bei bauüblichen Mikrokontrollern stehen diese Verstärkerstufen 45 quasi kostenlos zur Verfügung. Wenn diese auf eine vergleichsweise hohe Verstärkung von z.B. 32x programmiert werden können, kann sogar in einer besonders einfachen Version mit etwas schlechterer Performance die gesamte Verstärker- und Signalkonditioniereinheit 30 weggelassen bzw. überbrückt werden bzw. durch Koppelkondensatoren ersetzt werden.

Auch kann das Triggern insbesondere dann durch digitale Vergleicher, die in A/D-Wandlern üblicherweise vorhanden sind, realisiert werden.

Damit besteht dann der gesamte Kern der Detektionsschaltung nur noch aus der Detektoranordnung 1, wenigen passiven Bauelementen sowie einem Mikrokontroller 20.

Erwähnt sei, dass die Signalpolarität nicht unbedingt auf analoger Ebene korrigiert werden muss. Es sind weiter Laserstrahlempfänger denkbar, die eine andere Zahl an Signalkanälen 33 als im vorstehenden Beispiel verwenden. Die Zahl an Signalkanälen 33 kann also zwei sein oder es wird eine größere Vielzahl an Signalkanälen 33 vorgesehen.

Während mit der vorstehend beschriebenen Anordnung bereits gute Ergebnisse erzielt werden können, kann die praktische Anwendbarkeit der Anordnung noch verbessert werden. Dazu sei angemerkt, dass die Anordnung im Regelfall auf Baustellen und dergl. zum Erfassen rotierender Laserstrahlen dient.

Dieser rotierende Laserstrahl wird im Regelfall eine horizontale Ebene überstreichen. Die positionsempfindlichen Lichtstrahldetektoren, die auf Baustellen und dergl. zu seinem Empfang und etwa dem Einnivellieren einer Höhe verwendet werden, besitzen - wie aus dem Vorstehenden ersichtlich- typisch mehrere, im Gebrauch in einer Reihe von oben nach unten angeordnete Photodioden. Quer über diese Reihe streicht dann der rotierende Laserstrahl hinweg. Dies führt bereits dann zu einer entsprechend der Zeit für das Überstreichen benötigten, eher kurzen Signaldauer, wenn der exakt lotrecht gehaltene Laserempfänger exakt senkrecht vom Strahl getroffen wird, also etwa das Eintrittsfenster exakt tangential zu einem Kreis um den Laserstrahl-Rotationsmittelpunkt gehalten wird. Wird der Laserstrahlempfänger nicht exakt tangential zum Kreis um den Laserstrahl-Rotationsmittelpunkt gehalten, verkürzt sich die Signaldauer noch weiter und gegebenenfalls wird zudem auch das Signal recht schwach, weil wenig Licht auf die Photodioden trifft.

Ein Lichtstrahlempfang unter breitem horizontalem Öffnungswinkel ist daher wünschenswert.

Mit dem Handgerät oder dergl., welches den eigentlichen positionsempfindlichen Lichtstrahldetektor aufweist, sollen also Strahlen unter einem breiten Öffnungswinkel erfassbar sein. Ist dies der Fall, erlaubt dies, genaue Messungen auch bei nicht exakt tangential gehaltenem Laserempfänger einfach durchzuführen.

Im Stand der Technik werden allenfalls breite Fenster in großem Abstand zu den Photodioden angeordnet, wobei Streumittel eingesetzt werden können, die zwar empfangene Lichtstrahlen verbreitern, aber zugleich stark schwächen. Die Lichtempfänger sind daher klobig und unempfindlich. Als Beispiel für einen Lichtempfänger nach dem Stand der Technik seien Empfänger wie nach US 2014/0203172 A1 erwähnt.

Es ist wünschenswert, handliche, empfindliche Lichtempfänger mit großem Offnungswinkel bereitzustellen.

Vorgeschlagen wird somit ein Lichtstrahlempfänger mit einem erfindungsgemäßen Lichtstrahldetektor, mit einem Gehäuse, einem langgestreckten Fenster darin, einer langgestreckten Lichtführstruktur hinter dem Fenster und lichtempfindlichen Bereichen, wobei die lichtempfindlichen Bereiche sich längs des langgestreckten Fensters erstrecken, und zwar beabstandet von diesem, und wobei die langgestreckte Lichtführstruktur zwischen dem langgestreckten Fenster und den lichtempfindlichen Bereichen angeordnet ist und mehrere Längsseitenflächen aufweist, wobei sich die Längsseitenflächen der langgestreckten Lichtführstruktur zwischen dem langgestreckten Fenster und den lichtempfindlichen Bereichen sowie entlang der lichtempfindlichen Bereiche erstrecken, und die Längsseitenflächen dazu ausgebildet sind, vom Fenster her in die Lichtführstruktur eintretendes Licht in die lichtempfindlichen Bereiche zu reflektieren.

Die lichtempfindlichen Bereiche können dem Fenster unmittelbar gegenüberliegen, so dass ein senkrecht auf das Fenster eintreffender Lichtstrahl ohne Reflexion an den Längsseitenflächen der Lichtführstruktur direkt auf die lichtempfindlichen Bereiche gelangt. In einem solchen Fall können die lichtempfindlichen Bereiche in einer Ebene parallel zu der Ebene des Fensters liegen. Alternativ und/oder zusätzlich ist es möglich, die lichtempfindlichen Bereiche anders anzuordnen, etwa in einer Ebene senkrecht zur Fensterebene. Die Lichtführstruktur kann dann so gestaltet sein, dass ein senkrecht auf das Fenster treffender Strahl auf die lichtempfindlichen Bereichen geführt wird. Dazu kann am vom Fenster abgewandten und den lichtempfindlichen Bereichen zugewandten Teil der Lichtführstruktur ein im Winkel von 45° stehender Spiegel oder eine im Winkel von 45° gebildete Seitenfläche, an welcher Totalreflexion stattfindet, vorgesehen sein.

Wie die obigen Ausführungen zeigen, werden - zumindest bei lichtempfindlichen Bereichen, welche in einer Ebene parallel zu der Ebene des Fensters liegen - nur die nicht hinreichend senkrecht, sondern unter zu schrägem Winkel auf das Fenster treffenden Lichtstrahlen durch Reflexion an den Längsseitenflächen der Lichtführstruktur auf die lichtempfindlichen Bereiche geführt. Dabei kann ein Lichtstrahl sowohl einfach als auch mehrfach an den Längsseitenflächen der Lichtführstruktur reflektiert werden.

Bei den lichtempfindlichen Bereichen handelt es sich um Photodioden des erfindungsgemäßen Lichtstrahldetektors, die zwischen mindestens zwei Gewichtungsnetzwerken angeordnet sind. Der Lichtstrahlempfänger kann mit einer Lichtführstruktur gebildet sein, bei der die sich zwischen dem langgestreckten Fenster und den lichtempfindlichen Bereichen entlang erstreckenden Bereiche der Längsseitenflächen als Spiegelflächen gebildet sind. Dies erlaubt eine besonders wenig massive Ausbildung von somit geringem Gewicht.

Alternativ und/oder zusätzlich kann der Lichtstrahlempfänger so gebildet sein, dass die Lichtführstruktur als prismatischer Körper gebildet ist und an den Längsseitenflächen zwischen dem langgestreckten Fenster und den lichtempfindlichen Bereichen Totalreflexion des innerhalb der Lichtführstruktur geführten Lichtes auftritt. Der prismatische Körper wird dabei aus einem für die zu erfassende Wellenlänge hinreichend transparenten Material wie z.B. Kunststoff gebildet sein.

Typisch wird bei einem Lichtstrahlempfänger und der beschriebenen Lichtführstruktur zur Aufweitung eines Strahls eine Streuanordnung vor dem Eintritt in die Lichtführstruktur vorgesehen sein. Wenn dann Licht aufgeweitet wird, damit mehrere der Photodioden ge- 27 - troffen werden, die die lichtempfindlichen Bereiche bilden, und dabei womöglich eine Aufweitung nicht nur in Längsrichtung, sondern auch quer erfolgt, geht das in die Querrichtung aufgeweitete Licht nicht für den Nachweis verloren, sondern wird dank der reflektierenden Längsseitenflächen doch noch in die Photodioden bzw auf die anderes gestalteten lichtempfindlichen Bereiche gelangen. Damit ist die Empfindlichkeit trotz Streumittelverwendung erhöht. Zudem wird unter einem flacheren Winkel auf das Fenster treffendes Licht trotz baulich kleiner Ausbildung des Lichtempfängers noch auf die lichtempfindlichen Bereiche gelangen können.

In den einzelnen Teilen von Figur 10 sind Bezugszeichen verwendet, die zum Teil bereits in anderen Figuren vergeben wurden; deswegen werden nachfolgend dann, wenn im Text auf jene Bezugszeichen, die in Fig. 10 verwendet werden, Bezug genommen wird, der jeweiligen Bezugszahl die Ziffern "10-" vorangestellt. Damit zeigt 10-1 eine positionsempfindliche optoelektronische Detektoranordnung; 10-2 Photodioden; 10-13 Lichtstrahlen; 10-15 Streumittel: Mikrolinsenarry, Lentikularfolie, Holographischer Diffuser etc.; 10-70 ein Gehäuseteil, und zwar ist bei einem realen Produkt dargestellt ein Detail der transparenten Gehäuseoberschale; 10-71 ein Prisma bzw. eine prismatische lichtleitende Struktur sowie 10-72 den Öffnungswinkel und 10-73 eine Dekorfolie, die das nach außen sichtbare Sensorfenster definiert.

Besondere Bedeutung hat die mit reflektierenden Grenzflächen gebildete lichtleitende Struktur, mit der Licht vom Eintrittsfenster zu den optoelektrischen Elementen wie der Photodiodenreihe geführt wird. Durch diese prismatische, lichtleitende Struktur wird Licht unter einem breiten Offnungswinkel erfasst und in ausreichendem Umfang selbst bei schrägem Einfall auf das optoelektrische Element geführt. Die in Fig. 10c gezeigte Anordnung mit zusätzlichem Prisma erlaubt schmälere Sensorfenster von z.B. 5mm bei einem Offnungswinkel, der trotzdem größer ist als der im Stand der Technik erzielte Offnungswinkel. Es sei im übrigen darauf hingewiesen, dass dieses Prisma nicht einer Spektralzerlegung, sondern der Lichtführung dient.

Vorgeschlagen wird damit unter anderem auch ein positionsempfindlicher Lichtstrahldetektor, der Photodioden für den Lichtstrahlempfang aufweist, wobei den Photodioden ein Strahlerfassungsverbesserungsmittel zur Verbesserung der Strahlerfassung zugeordnet ist, das bevorzugt so angeordnet ist, dass es den bei gegebenem Lichtrahldurchmesser auf die Photodioden fallenden Lichtfleck für den simultanen Empfang durch wenigstens zwei, bevorzugt mehr benachbarte Photodioden aufweitet.

Dabei wird bevorzugt, dass das Strahlerfassungsverbesserungsmittel zumindest eines von Lentikularfolie, Mikrolinsenarray, holographischem Diffuser oder dergl. bei der Gehäuseoberseite aufweist sowie nachfolgend eine tiefer ins Gehäuse-Innere hin führende Lichtführstruktur zum Führen des aufgeweiteten Lichtstrahls zu den Photodioden herunter in das Gehäuseinnere.

Diese Lichtführstruktur führt dabei in Richtung von der das Eintrittsfenster aufweisenden Gehäuseoberseite weg und hin auf die Gehäuseunterseite.

Damit unterscheidet sich die hier vorgestellte Lichtführstruktur signifikant von dem vorbekannten Lichtleiter, der von der Anmelderin bzw. dem Erfinder früher vorgeschlagen wurde und der Licht, das mittig auf einem als Lichtleiter dienenden Stab oder dergl. empfangen wird, simultan zu dessen beiden Stirnseiten leiten soll, wo es dann mit Photodioden nachzuweisen ist. Vorliegend wird nicht in eine Seitenwand eingestreutes Licht über große Strecken in Querrichtung zu entgegengesetzen Stirnseiten geleitet, sondern Licht (evtl.) mit einer stark ablenkenden Struktur wie einer Lentikularfolie in eine erste Stirnseite eines Lichtleiters geführt und auf der gegenüberliegenden Stirnseite auf ein optoelektronisches Element wie eine Photodiode eingestrahlt. Damit ergeben sich Vorteile im erfassten Öffnungswinkel ohne Erhöhung der Fensterbreite oder der Empfängerdicke.

Es ist möglich, dass der positionsempfindliche Lichtstrahldetektor eine Streufolie umfasst, die vor der Lichtführstruktur angeordnet ist.

**Patentansprüche**

1. Positionsempfindlicher Lichtstrahldetektor mit

   Photodioden und
   mindestens zwei Gewichtungsnetzwerken (3, 4, 11, 12),

      die jeweils

         einen Signalausgang (CH1, CH2, CH3, CH4)
         und
         Netzwerk-Knoten

      aufweisen,

   wobei
   von den Netzwerk-Knoten des ersten Gewichtungsnetzwerkes eine Mehrzahl für einen Photodiodenanschluss vorgesehen sind,
   **dadurch gekennzeichnet, dass** jeder Knoten der Mehrzahl von Netzwerk-Knoten des ersten Gewichtungsnetzwerks

         über eine Photodiode (2)
         mit jeweils einem der Knoten
         des zweiten Gewichtungsnetzwerkes verbunden ist.

2. Positionsempfindlicher Lichtstrahldetektor nach dem vorhergehenden Anspruch,
   **dadurch gekennzeichnet, dass**

      an die Knoten
      für den Photodiodenanschluß
      des ersten Gewichtungsnetzwerkes
      nur Kathoden der Photodioden
      und
      an die Knoten
      für den Photodiodenanschluß

des zweiten Gewichtungsnetzwerkes
nur Anoden der Photodioden
angeschlossen sind.

3. Positionsempfindlicher Lichtstrahldetektor nach einem der vorhergehenden Ansprüche, **dadurch gekennzeichnet, dass**
zumindest eines der Gewichtungsnetzwerke als Kette gebildet ist,
wobei

an einem Ende der Kette
der Signalausgang angeordnet ist und
am anderen Ende der Kette
eine Vorspannung angeschlossen ist.

4. Positionsempfindlicher Lichtstrahldetektor nach dem vorhergehenden Anspruch, **dadurch gekennzeichnet, dass**
zumindest eines der, bevorzugt mehrere, insbesondere bevorzugt alle der Gewichtungsnetzwerke

als Kette von elektrischen Widerständen
oder
als Kette von Induktivitäten
oder
als Kette von Resonanzkreisen gebildet sind.

5. Positionsempfindlicher Lichtstrahldetektor nach dem vorhergehenden Anspruch, **dadurch gekennzeichnet, dass**
zwischen den Widerständen, Induktivitäten oder Resonanzkreisen der Kette die Knoten für den Photodiodenanschluss angeordnet sind.

6. Positionsempfindlicher Lichtstrahldetektor nach dem vorhergehenden Anspruch, wobei ein oder mehrere Gewichtungsnetzwerke als Kette von elektrischen Widerständen ausgebildet sind, **dadurch gekennzeichnet, dass** die Widerstände in einer Kette die gleichen Soll-Widerstandswerte besitzen.

7. Positionsempfindlicher Lichtstrahldetektor nach einem der vorhergehenden Ansprüche, **dadurch gekennzeichnet, dass** die mindestens zwei Gewichtungsnetzwerke jeweils als Kette ausgebildet sind,

wobei

an einem Ende jeder Kette
der Signalausgang angeordnet ist und
am anderen Ende jeder Kette
eine Vorspannung angeschlossen ist,

und wobei an das erste und zweite Gewichtungsnetzwerk unterschiedliche Vorspannungen (Vaa, Vcc) angeschlossen werden.

8. Positionsempfindlicher Lichtstrahldetektor nach einem der vorhergehenden Ansprüche,
**dadurch gekennzeichnet, dass**
er so ausgebildet ist, dass

bei Lichtstrahlempfang
auf mindestens einem zwischen einem ersten und einem zweiten Gewichtungsnetzwerk angeordneten photoelektrischen Element, insbesondere auf mindestens einer Photodiode
am Signalausgang des ersten Gewichtungsnetzwerkes eine erste Signalpolarität ansteht,
die jener am Signalausgang des zweiten Gewichtungsnetzwerkes entgegengesetzt ist.

9. Positionsempfindlicher Lichtstrahldetektor nach dem vorhergehenden Anspruch, **dadurch gekennzeichnet, dass**

eine Reihe von Photodioden nebeneinander vorgesehen ist,
die Gewichtungsnetzwerke als Ketten ausgebildet sind

und
die in einer Reihe angeordneten Photodioden
mit in der Kette aufeinander folgenden Knoten des Gewichtungsnetzwerkes verbunden sind.

10. Positionsempfindlicher Lichtstrahldetektor nach einem der vorhergehenden Ansprüche, **dadurch gekennzeichnet, dass** den Photodioden ein Strahlerfassungsverbesserungsmittel zur Verbesserung der Strahlerfassung zugeordnet ist, das bevorzugt so angeordnet ist, dass es den bei gegebenem Lichtrahldurchmesser auf die Photodioden fallenden Lichtfleck für den simultanen Empfang durch wenigstens zwei, bevorzugt mehr benachbarte Photodioden aufweitet.

11. Positionsempfindlicher Lichtstrahldetektor nach einem der vorhergehenden Ansprüche, **dadurch gekennzeichnet, dass** das Strahlerfassungsverbesserungsmittel zumindest eine Lentikularfolie bei einer Gehäuseoberseite und eine Lichtführstruktur zum Führen des aufgeweiteten Lichtstrahls zu den Photodioden herunter in ein Gehäuseinneres umfasst.

12. Positionsempfindlicher Lichtstrahldetektor nach einem der beiden vorhergehenden Ansprüche, **dadurch gekennzeichnet, dass** das Strahlerfassungsverbesserungsmittel eine Streufolie umfasst.

13. Positionsempfindlicher Lichtstrahldetektor nach einem der vorhergehenden Ansprüche, **dadurch gekennzeichnet, dass**

wenigstens ein drittes Gewichtungsnetzwerk vorgesehen ist,
wobei mindestens das zweite der mindestens drei Gewichtungsnetzwerke als Kette gebildet ist,
die von dem Signalausgang und einem Versorgunsspannungsemgang verschiedene, innere Knoten aufweist, wobei
an mindestens einem dieser inneren Knoten der Kette

entweder die Anoden
oder die Kathoden

zweier unterschiedlicher Photodioden angeschlossen sind,
wobei der andere Pol der ersten dieser Photodioden mit einem Knoten der ersten Gewichtungsnetzwerken verbunden ist und
wobei der andere Pol der zweiten dieser Photodioden mit einem Knoten des dritten Gewichtungsnetzwerkes verbunden ist.

14. Verfahren zum Empfang eines rotierenden, eine Ebene überstreichenden Laserstrahls mit einem positionsempfindlichen Lichtstrahldetektor nach einem der Ansprüche 1-13, **dadurch gekennzeichnet, dass** simultan erhaltene Kathodenströme und Anodenströme der mit den verschiedenen Gewichtungsnetzwerken verbundenen Photodioden ausgewertet werden, um die Position des Strahlempfangs zu bestimmen.

15. Lichtstrahlempfänger mit einem positionsempfindlichen

Lichtstrahldetektor nach einem der Ansprüche 1-13,
aufweisend

ein Gehäuse,
ein langgestrecktes Fenster darin,
eine langgestreckte Lichtführstruktur hinter dem Fenster
und
lichtempfindliche Bereiche, die durch Photodioden realisiert sind, wobei die Photodioden mit mindestens zwei Gewichtungsnetzwerken derart verbunden sind, dass ein positionsempfindlicher Lichtstrahldetektor nach einem der Ansprüche 1 bis 13 realisiert ist,

**dadurch gekennzeichnet, dass**

die lichtempfindlichen Bereiche sich

entlang des langgestreckten Fensters,
aber
beabstandet vom langgestreckten Fenster

erstrecken,
wobei die langgestreckte Lichtfuhrstruktur

zwischen dem langgestreckten Fenster
und den lichtempfindlichen Bereichen
angeordnet ist
und
mehrere Längsseitenflächen aufweist,

wobei
sich die Längsseitenflächen der langgestreckten Lichtführstruktur

zwischen dem langgestreckten Fenster und
den lichtempfindlichen Bereichen und zwar
entlang der lichtempfindlichen Bereiche

erstrecken,
und die Längsseitenflächen dazu ausgebildet sind,
vom Fenster her
in die Lichtführstruktur
eintretendes Licht
in die entlang des Fensters, aber beabstandet dazu angeordneten lichtempfindlichen Bereiche zu reflektieren.

**Claims**

1. A position-sensitive light beam detector comprising

   photodiodes and
   at least two weighting networks (3,4,11,12),
   each comprising

      a signal output (CH1,CH2,CH3,CH4) and
      network nodes,

   wherein
   a plurality of the network nodes of the first weighting network are provided for a photodiode connection, **characterized in that**

      each node of said plurality of nodes of said first weighting network
      is connected via a photodiode (2) to one of the nodes of the second weighting network.

2. The position-sensitive light beam detector as claimed in the preceding claim,
   **characterized in that**

   to the nodes for photodiode connection of the first weighting network,
   only cathodes of the photodiodes are connected and to the nodes for the photodiode connection of
   the second weighting network
   only anodes of the photodiodes are connected

3. The position-sensitive light beam detector as claimed in either of the preceding claims, **characterized in that**
   at least one of the weighting networks is formed as a chain,
   wherein

the signal output is arranged
at one end of the chain and
a bias voltage is connected
to the other end of the chain.

4. The position-sensitive light beam detector as claimed in the preceding claim, **characterized in that** at least one, preferably a plurality, more particularly preferably all, of the weighting networks are formed

as a chain of electrical resistances
or
as a chain of inductances
or
as a chain of resonant circuits.

5. The position-sensitive light beam detector as claimed in the preceding claim, **characterized in that** the nodes for the photodiode connection are arranged between the resistances, inductances or resonant circuits of the chain.

6. The position-sensitive light beam detector as claimed in the preceding claim, wherein one or a plurality of weighting networks are embodied as a chain of electrical resistances, **characterized in that** the resistances in a chain have the same nominal resistance values.

7. The position-sensitive light beam detector as claimed in any of the preceding claims,

**characterized in that** the at least two weighting networks are each embodied as a chain, wherein

the signal output is arranged
at one end of each chain and
a bias voltage is connected
to the other end of each chain,

and wherein different bias voltages (Vaa, Vcc) are connected to the first and second weighting network.

8. The position-sensitive light beam detector as claimed in any of the preceding claims, **characterized in that** it is embodied such that

upon light beam reception
on at least one photoelectric element arranged between a first and a second weighting network, in particular on at least one photodiode,
a first signal polarity is present at the signal output of the first weighting network,
said first signal polarity being opposite to that at the signal output of the second weighting network.

9. The position-sensitive light beam detector as claimed in the preceding claim, **characterized in that**

provision is made of a series of photodiodes alongside one another,
the weighting networks are embodied as chains
and
the photodiodes arranged in a series are connected to nodes of the weighting network that succeed one another in the chain.

10. The position-sensitive light beam detector as claimed in any of the preceding claims, **characterized in that** the photodiodes are assigned a beam detection enhancement means for enhancing the beam detection, which is preferably arranged such that it expands the light spot incident on the photodiodes with a given light beam diameter for simultaneous reception by at least two, preferably more, adjacent photodiodes.

11. The position-sensitive light beam detector as claimed in any of the preceding claims, **characterized in that** the beam detection enhancement means comprises at least one lenticular film at a housing top side and a light guiding structure for guiding the expanded light beam down to the photodiodes into an interior of the housing.

12. The position-sensitive light beam detector as claimed in either of the two preceding claims, **characterized in that** the beam detection enhancement means comprises a diffusing film.

13. The position-sensitive light beam detector as claimed in any of the preceding claims, **characterized in that** at least one third weighting network is provided, wherein at least the second of the at least three weighting networks is formed as a chain

> having internal nodes different than the signal output and a supply voltage input,
> wherein
> at at least one of said internal nodes of the chain
>
> > either the anodes
> > or the cathodes
>
> of two different photodiodes are connected,
> wherein the other pole of the first of said photodiodes is connected to a node of the first weighting network and wherein the other pole of the second of said photodiodes is connected to a node of the third weighting network.

14. A method for receiving a rotating laser beam sweeping over a plane comprising a position-sensitive light beam detector according to one of claims 1-13,
**characterized in that**
simultaneously obtained cathode currents and anode currents of the photodiodes connected to the different weighting networks are evaluated in order to determine the position of beam reception.

15. A light beam receiver comprising a position-sensitive light beam detector according to one of claims 1-13,

> comprising
>
> > a housing,
> > an elongated window therein,
> > an elongated light guiding structure behind the window
> > and
> > light-sensitive regions implemented by photodiodes,
>
> wherein the photodiodes are connected via weighing networks such that a position-sensitive light beam detector according to one of claims 1 to 13 is implemented,
> **characterized in that**
>
> > the light-sensitive regions extend
> >
> > > along the elongated window,
> > > but
> > > at a distance from the elongated window,
> >
> > wherein the elongated light guiding structure is arranged
> > between the elongated window
> > and the light-sensitive regions
> > and
> > comprises a plurality of longitudinal side surfaces,
> >
> > wherein
> > the longitudinal side surfaces of the elongated light guiding structure extend
> >
> > > between the elongated window
> > > and
> > > the light-sensitive regions,
> > > specifically
> > > along the light-sensitive regions,

and the longitudinal side surfaces are configured to reflect
light entering
the light guiding structure from the window
into the light-sensitive regions arranged along the window but at a distance therefrom.

**Revendications**

1. Détecteur de faisceau lumineux sensible à la position, comprenant

 des photodiodes, et
 au moins deux réseaux de pondération (3, 4, 11, 12) qui présentent respectivement une sortie de signal (CH1, CH2, CH3, CH4) et des nœuds de réseau,
 dans lequel, parmi les nœuds de réseau du premier réseau de pondération, une pluralité est prévue pour une connexion de photodiodes,
 **caractérisé en ce que** chaque nœud de la pluralité de nœuds de réseau du premier réseau de pondération est relié par l'intermédiaire d'une photodiode (2) à respectivement l'un des nœuds du deuxième réseau de pondération.

2. Détecteur de faisceau lumineux sensible à la position selon la revendication précédente, **caractérisé en ce que**

 seules des cathodes des photodiodes sont connectées aux nœuds servant à la connexion de photodiodes du premier réseau de pondération, et
 seules des anodes des photodiodes sont connectées aux nœuds servant à la connexion de photodiodes du deuxième réseau de pondération.

3. Détecteur de faisceau lumineux sensible à la position selon l'une quelconque des revendications précédentes, **caractérisé en ce qu'**au moins l'un des réseaux de pondération est formé comme une chaîne,

 la sortie de signal étant disposée à une extrémité de la chaîne, et
 une tension de polarisation étant connectée à l'autre extrémité de la chaîne.

4. Détecteur de faisceau lumineux sensible à la position selon la revendication précédente, **caractérisé en ce qu'**au moins un, de préférence plusieurs, en particulier tous les réseaux de pondération sont formés

 comme une chaîne de résistances électriques, ou
 comme une chaîne d'inductances, ou
 comme une chaîne de circuits résonnants.

5. Détecteur de faisceau lumineux sensible à la lumière selon la revendication précédente, **caractérisé en ce que** les nœuds pour la connexion de photodiodes sont disposés entre les résistances, les inductances ou les circuits résonnants de la chaîne.

6. Détecteur de faisceau lumineux sensible à la lumière selon la revendication précédente, dans lequel un ou plusieurs réseaux de pondération sont réalisés comme une chaîne de résistances électriques, **caractérisé en ce que** les résistances dans une chaîne possèdent les mêmes valeurs de résistance théoriques.

7. Détecteur de faisceau lumineux sensible à la lumière selon l'une quelconque des revendications précédentes, **caractérisé en ce que** les au moins deux réseaux de pondération sont respectivement réalisés comme une chaîne,

 la sortie de signal étant disposée à une extrémité de chaque chaîne, et
 une tension de polarisation étant connectée à l'autre extrémité de chaque chaîne, et
 différentes tensions de polarisation (Vaa, Vcc) étant connectées au premier et au deuxième réseau de pondération.

8. Détecteur de faisceau lumineux sensible à la lumière selon l'une quelconque des revendications précédentes, **caractérisé en ce qu'**il est réalisé de telle sorte qu'à la réception du faisceau lumineux, sur au moins un élément photoélectrique disposé entre un premier et un deuxième réseau de pondération, en particulier sur au moins une photodiode, à la sortie de signal du premier réseau de pondération est appliquée une première polarité de signal qui est opposée à celle se trouvant à la sortie de signal du deuxième réseau de pondération.

9. Détecteur de faisceau lumineux sensible à la lumière selon la revendication précédente, **caractérisé en ce que**

une série de photodiodes est prévue les unes à côté des autres,
les réseaux de pondération sont réalisés comme des chaînes, et
les photodiodes disposées en série sont reliées à des nœuds du réseau de pondération consécutifs dans la chaîne.

10. Détecteur de faisceau lumineux sensible à la lumière selon l'une quelconque des revendications précédentes, **caractérisé en ce qu'**un moyen d'amélioration de détection de faisceau servant à améliorer la détection de faisceau est associé aux photodiodes et est disposé de préférence de telle sorte qu'il élargit le point lumineux incident sur les photodiodes pour un diamètre de faisceau lumineux donné en vue de la réception simultanée par au moins deux, de préférence plusieurs photodiodes voisines.

11. Détecteur de faisceau lumineux sensible à la lumière selon l'une quelconque des revendications précédentes, **caractérisé en ce que** le moyen d'amélioration de détection de faisceau comprend au moins une feuille lenticulaire au niveau d'une face supérieure de boîtier et une structure de guidage de lumière servant à guider le faisceau lumineux élargi vers le bas jusqu'aux photodiodes à l'intérieur d'un boîtier.

12. Détecteur de faisceau lumineux sensible à la lumière selon l'une des deux revendications précédentes, **caractérisé en ce que** le moyen d'amélioration de détection de faisceau comprend une feuille de diffusion.

13. Détecteur de faisceau lumineux sensible à la lumière selon l'une quelconque des revendications précédentes, **caractérisé en ce qu'**au moins un troisième réseau de pondération est prévu,

au moins le deuxième des au moins trois réseaux de pondération étant formé comme une chaîne qui présente des nœuds intérieurs différents de la sortie de signal et d'une entrée de tension d'alimentation,
soit les anodes, soit les cathodes de deux photodiodes différentes étant connectées à au moins l'un de ces nœuds intérieurs de la chaîne,
l'autre pôle de la première de ces photodiodes étant relié à un nœud des premiers réseaux de pondération, et
l'autre pôle de la deuxième de ces photodiodes étant relié à un nœud du troisième réseau de pondération.

14. Procédé de réception d'un faisceau laser tournant, balayant un plan, avec un détecteur de faisceau lumineux sensible à la lumière selon l'une quelconque des revendications 1 à 13, **caractérisé en ce que** des courants de cathode et des courants d'anode reçus simultanément des photodiodes reliées aux différents réseaux de pondération sont évalués pour déterminer la position de la réception de faisceau.

15. Récepteur de faisceau de lumière, comprenant un détecteur de faisceau lumineux sensible à la lumière selon l'une quelconque des revendications 1 à 13, présentant

un boîtier,
une fenêtre allongée dans celui-ci,
une structure de guidage de lumière allongée derrière la fenêtre, et
des zones photosensibles qui sont réalisées par des photodiodes, les photodiodes étant reliées à au moins deux réseaux de pondération de façon à réaliser un détecteur de faisceau lumineux sensible à la lumière selon l'une quelconque des revendications 1 à 13, **caractérisé en ce que** les zones photosensibles s'étendent le long de la fenêtre allongée mais à distance de la fenêtre allongée,
dans lequel la structure de guidage de lumière allongée est disposée entre la fenêtre allongée et les zones photosensibles et présente plusieurs surfaces latérales longitudinales,
les surfaces latérales longitudinales de la structure de guidage de lumière allongée s'étendant entre la fenêtre allongée et les zones photosensibles, et notamment le long des zones photosensibles, et
les surfaces latérales longitudinales étant réalisées pour réfléchir la lumière entrant de la fenêtre dans la structure de guidage de lumière dans les zones photosensibles disposées le long de la fenêtre mais à distance de celle-ci.

Fig. 1a

Fig. 1b

Fig. 1c

Fig. 1d

Fig. 1e

Fig. 1f

Fig. 1g

# Fig. 1 (Stand der Technik)

**Fig. 2a**

**Fig. 2b**

**Fig. 2c**

**Fig. 2d**

**Fig. 2**

Fig. 3

Fig. 4

Fig. 5a

Fig. 5b

Fig. 6a

Fig. 6b

**Fig. 7**

**Fig. 8**

Fig. 9

**Fig. 10a**

**Fig. 10b**

**Fig. 10c**

**Fig. 10d**

**Fig. 10e**

**Fig. 10f**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5869834 A
- US 2006049339 A
- US 7019278 B
- US 20140203172 A
- US 9121695 B

- US 7394527 B
- DE 112013004987
- DE 102013019532
- US 7724352 B
- US 20140203172 A1

**In der Beschreibung aufgeführte Nicht-Patentliteratur**

- **G.P. PETERSSON ; L.E. LINDHOLM.** Position sensitive detector with high linearity. *IEEE Journal of Solid State Circuit,* 1978, vol. 13 (3), 392
- **HUAI-DONG DING ; M. IDESAWA.** Multi-Resolution Image Position Sensing Characteristics of R-HPSD. *Journal of Robotics and Mechatronics,* 1993, vol. 5 (2), 122-129

- **HUAI-DONG DING ; M. IDESAWA ; S. MATSUMO-TO.** A Comb-Structured PSD and Its Image Position Sensing Characteristics. *Journal of the Society of Instrument and Control Engineers,* 1994, vol. 30 (8), 883-891